# EUROPEAN PATENT APPLICATION

(11) **EP 1 300 996 A1**
(43) Date of publication of application: **09.04.2003**
(21) Application number: 02726496.9
(22) Date of filing: 27.05.2002
(51) Int. Cl.: H04L 12/56

(54) **DATA TRANSMISSION APPARATUS AND DATA TRANSMISSION METHOD**

(30) Priority: 30.05.2001 JP 2001162903
(71) Applicant: MATSUSHITA ELECTRIC INDUSTRIAL CO., LTD., Kadoma-shi, Osaka 571-8501 (JP)
(72) Inventor: OHMURA, Masahiro, Yokohama-shi, Kanagawa 226-0011 (JP); HIGUCHI, Shinichi, Yokohama-shi, Kanagawa 232-0011 (JP)
(74) Representative: Grünecker, Kinkeldey, Stockmair & Schwanhäusser Anwaltssozietät
(86) International application number: JP0205109
(87) International publication number: WO02100049

(57) **Abstract**

When receiving a marker cell indicative of a timing of switching between current use and reserve use, system switching control section 280-1 in first transmission path interface section 270-1 that is for current use in the initial state notifies system switching control section 280-2 for reserve use of the contents of reading order table and reading pointer. Until marker cells are detected in buffers for all quality classes after receiving a marker cell, read section 276-1 for current use continues to read cells based on the reading order table and reading pointer, while read section 276-2 for reserve use abandons cells based on the reading order table and reading pointer notified from system switching control section 280-2. Then, when marker cells are detected in the buffers for all the quality classes in the system for current use, switching is performed from the current use to reserve use.

## Description

### Technical Field

The present invention relates to a data transmission apparatus and data transmission method for assembling received user data into ATM cells to transmit over a transmission path.

### Background Art

In a data transmission apparatus for transmitting received user data on networks, it is indispensable to provide a dual configuration with systems for current use and reserve use to improve the reliability. In this case, it is required to switch between the systems for current use and reserve use in an instant. In particular, it is necessary to devise a transmission path interface section that transmits frames such as ATM (Asynchronous Transfer Mode) cells to a transmission path so as to prevent cells from being lost or overlapping.

In this transmission path interface section in the data transmission apparatus, buffers that store cells to perform band assurance are provided for each quality class (for example, each connection or required quality class for connection (such as delay or abandonment rate)) to assure the band.

The following description is given of the operation for switching between systems for current use and reserve use in a conventional data transmission apparatus.

During the general operation of the conventional data transmission apparatus, cells assembled from user data are provided to both transmission path interface sections for current use and reserve use. The cells provided to the transmission path interface section for current use are stored in predetermined buffers for each quality class, read according to a reading order table that prescribes the reading priority and reading order, and transmitted over the transmission path. Meanwhile, the cells provided to the transmission path interface section for reserve use are abandoned without being stored in the buffers, and not transmitted over the transmission path.

When the switching between the systems for current use and reserve use is required, a marker cell indicative of switching timing is assembled, and provided to both transmission path interface sections for current use and reserve use. The marker cell provided to each transmission path interface section is replicated and written in buffers for all quality classes.

When receiving the marker cell, the transmission path interface section for current use abandons cells after the marker cell without storing in the buffers. When it is detected that a first cell in a buffer for each quality class is a marker cell, the marker cell is abandoned, and the quality class of the buffer in which the marker cell is detected is held. Then, when the buffer for the quality class in which the marker cell is already detected is designated according to the reading order table, since the buffer does not have any cell, cells are read from a buffer for a quality class having a second priority.

Meanwhile, when the transmission path interface section for reserve use receives a marker cell, the section abandons the marker cell, and stores cells after the marker cell in predetermined buffers for each quality class.

When first cells in the buffers for all quality classes are marker cells in the transmission path interface section for current use, the contents of the reading order table are notified to the transmission path interface section for reserve use and concurrently, the systems are switched.

Thus, in the conventional data transmission apparatus, when the transmission path interface section for current use receives the marker cell, the system for current use abandons all the cells after the marker cell, while the transmission path interface section for reserve use temporarily stores all the cells after marker cell. Then, when marker cells are detected in the buffers for all the quality classes in the system for current use, the system for current use is switched to the system for reserve use. In this way, the switching from the system for current use to the system for reserve use is implemented with no cells lost or overlapped.

However, the above-mentioned conventional data transmission apparatus has such a problem that among a plurality of quality classes, in a quality class in which a marker cell is first detected, cells cannot be transmitted to the transmission path until marker cells are detected in the rest of quality classes, and that the delay increases in transferring cells of the quality class. In particular, in the case of a quality class such as CBR (Constant Bit Rate), there is a problem that during the time cells are not transmitted, it is regarded that communications of such a quality class disconnect, i.e., the communication quality deteriorates.

### Disclosure of Invention

It is an object of the present invention to perform switching between systems for current use and reserve use with no cells lost or overlapped without increasing a transfer delay in a data transmission apparatus that assembles received user data into ATM cells to transmit over a transmission path.

According to an aspect of the present invention, a data transmission apparatus has a cell assembling section that assembles received user data into cells, a first transmission path interface section and a second transmission path interface section each of which has a plurality of buffers for each quality class for band assurance and in which when one of the sections operates as a system for current use that transmits cells assembled in the cell assembling section over a transmission path, the other one of the sections operates as a system for reserve use, and a marker cell output instructing section that instructs the cell assembling section to output a marker cell that is a cell indicative of a timing of switching between the system for current use and the system for reserve use, where in switching between the first transmission path interface section and the second transmission path interface section to switch between the system for current use and the system for reserve use, one of the sections that operates as the system for current use transmits cells from a buffer in which the marker cell is detected until marker cells are detected in the buffers for all quality classes, while upon reception of a notification indicative of a quality class in which the marker cell is detected in the system for current use, the other one of the sections that operates as the system for reserve use abandons the same cells as cells transmitted after the marker cell is detected from the buffer for the quality class in the system for current use, and when marker cells are detected in the buffers for all quality classes in the system for current use, the system for current use stops transmitting cells and is switched to the system for reserve use, while the system for reserve use starts transmitting cells and is switched to the system for current use.

According to another aspect of the present invention, a data transmission method in an apparatus provided with a dual configuration with sysmets for current use and reserve use has the steps of assembling received user data into cells, of assembling a marker cell that is a cell indicative of a timing of switching between a system for current use and a system for reserve use, of in the system for current use, transmitting cells from a buffer in which the marker cell is detected until marker cells are detected in buffers for all quality classes, of in the system for reserve use, upon reception of a notification indicative of a quality class in which the marker cell is detected in the system for current use, abandoning the same cells as being transmitted after the marker cell is detected from the buffer for the quality class in the system for current use, and of when marker cells are detected in buffers for all quality classes in the system for current use, in the system for current use, stopping transmitting cells and being switched to the system for reserve use, while in the system for reserve use, starting transmitting cells and being switched to the system for current use.

### Brief Description of Drawings

FIG.1 is a block diagram illustrating a configuration of a mobile communication system according to one embodiment of the present invention;
FIG.2 is a block diagram illustrating a configuration of a base station apparatus according to the one embodiment of the present invention;
FIG.3 is a block diagram illustrating configurations of a first transmission path interface section and a second transmission path interface section according to the one embodiment of the present invention;
FIG.4 is a conceptual view illustrating a reading order table and reading pointer according to the one embodiment of the present invention;
FIG.5 is a flow diagram to explain the operation of a read control section according to the one embodiment of the present invention;
FIG.6A is a diagram illustrating an example of a cell stream to be processed in the data transmission apparatus according to the one embodiment of the present invention and a conventional data transmission apparatus;
FIG.6B is a diagram illustrating a state in which the cell stream is input to an interface section of the data transmission apparatus according to the one embodiment of the present invention or the conventional data transmission apparatus during general operation;
FIG.6C is a diagram illustrating a state in which the cell stream is input to the interface section of the conventional data transmission apparatus; and
FIG.6D is a diagram illustrating a state in which the cell stream is input to the interface section of the data transmission apparatus according to the one embodiment of the present invention.

### Best Mode for Carrying Out the Invention

It is a gist of the present invention that when a transmission path interface section for current use receives a marker cell indicative of a switching timing, the section writes replicas of the marker cell in buffers for all the quality classes, and even after detecting the marker cell in reading cells from each buffer, reads cells from the buffers for current use until marker cells are detected in the buffers for all the quality classes, while cells corresponding to the read cells are abandoned from a buffer for reserve use, and the current use and reserve use is switched when marker cells are detected in the buffers for all the quality classes.

An embodiment of the present invention will be described below with reference to accompanying drawings.

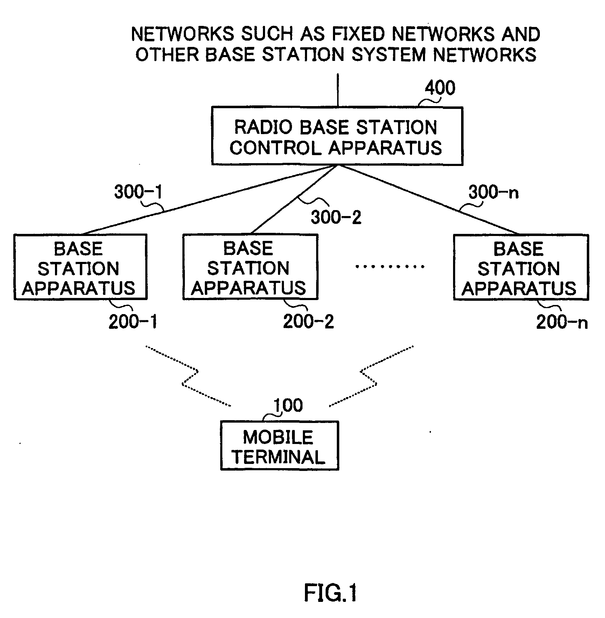

FIG.1 is a block diagram illustrating a configuration of a mobile communication system according to one embodiment of the present invention.

The mobile communication system of this embodiment as illustrated in FIG.1 has mobile terminal 100 present in a communication area, a plurality of base station apparatuses 200-1 to 200-n that performs radio communications with mobile terminal 100, and radio base station control apparatus 400 that performs centralized control of base station apparatuses 200-1 to 200-n respectively over wired transmission paths 300-1 to 300-n.

In the mobile communication system having the above-mentioned configuration, mobile terminal 100 issues user data as a radio-frequency signal, and base station apparatus 200 receives the issued signal. Base station apparatus 200 assembles the received user data into cells to transmit to radio base station control apparatus 400 via wired transmission path 300. The cells transmitted to radio base station control apparatus 400 are transmitted to fixed networks and networks of other base station systems.

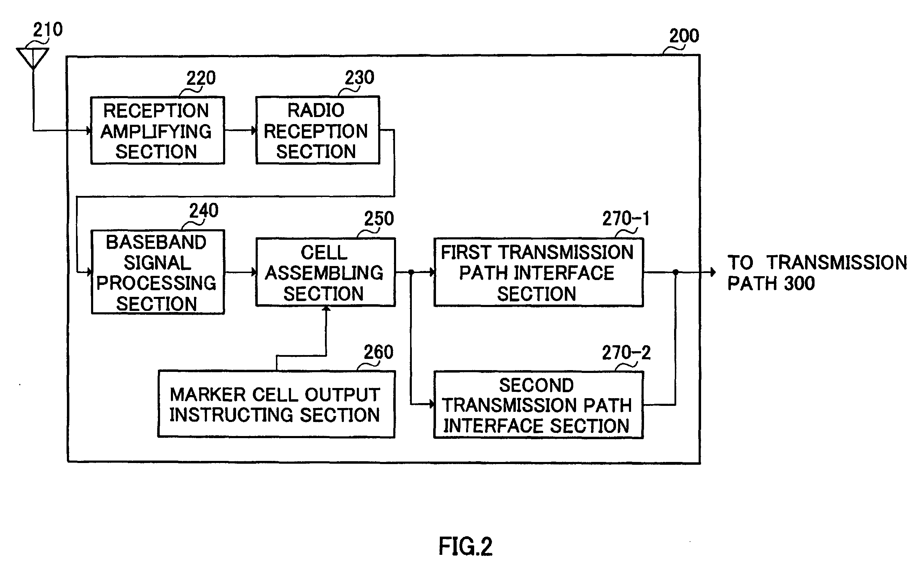

FIG.2 is a block diagram illustrating a configuration of base station apparatus 200. As illustrated in FIG.2, base station apparatus 200 has antenna 210, reception amplifying section 220, radio reception section 230, baseband signal processing section 240, cell assembling section 250, marker cell output instructing section 260, first transmission path interface section 270-1 and second transmission path interface section 270-2.

Antenna 210 is used to receive the radio-frequency signal from mobile terminal 100. Reception amplifying section 220 amplifies the signal received in antenna 210. Radio reception section 230 performs analog/digital conversion on the signal received in antenna 210. Baseband signal processing section 240 performs dispreading of the received signal, chip synchronization, error correcting coding and multiplexing and demultiplexing of data. Cell assembling section 250 assembles cells of the received signal, and outputs the same cells to both first transmission path interface section 270-1 and second transmission path interface section 270-2 in the same order. Further, when receiving a marker cell output instruction from marker cell output instructing section 260, cell assembling section 250 assembles a marker cell to transmit to both first transmission path interface section 270-1 and second transmission path interface section 270-2. In addition, the format of the marker cell is not prescribed in particular in this embodiment, and for example, an available bit in an ATM cell header may be used for marker cell recognition.

First transmission path interface section 270-1 and second transmission path interface section 270-2 receive cells from cell assembling section 250, and transmit the received cells over the transmission path with a frequency band assigned in connection setting. While both first transmission path interface section 270-1 and second transmission path interface section 270-2 receive cells from cell assembling section 250 in the same order, only one of the sections transmits the cells over transmission path 300. One of the sections that transmits cells over transmission path 300 is defined to be a system for current use, and the other section that does not transmit cells over transmission path 300 is defined to be a system for reserve use.

Marker cell output instructing section 260 instructs cell assembling section 250 to output a marker cell in switching between the system for current use and the system for reserve use. In addition, in this embodiment a criterion is not defined particularly for marker cell output instructing section 260 to issue a marker cell output instruction. However, for example, as the criterion, a case is considered of detecting that a transmission path interface section for current use whose operation condition is always monitored is removed for trouble or maintenance.

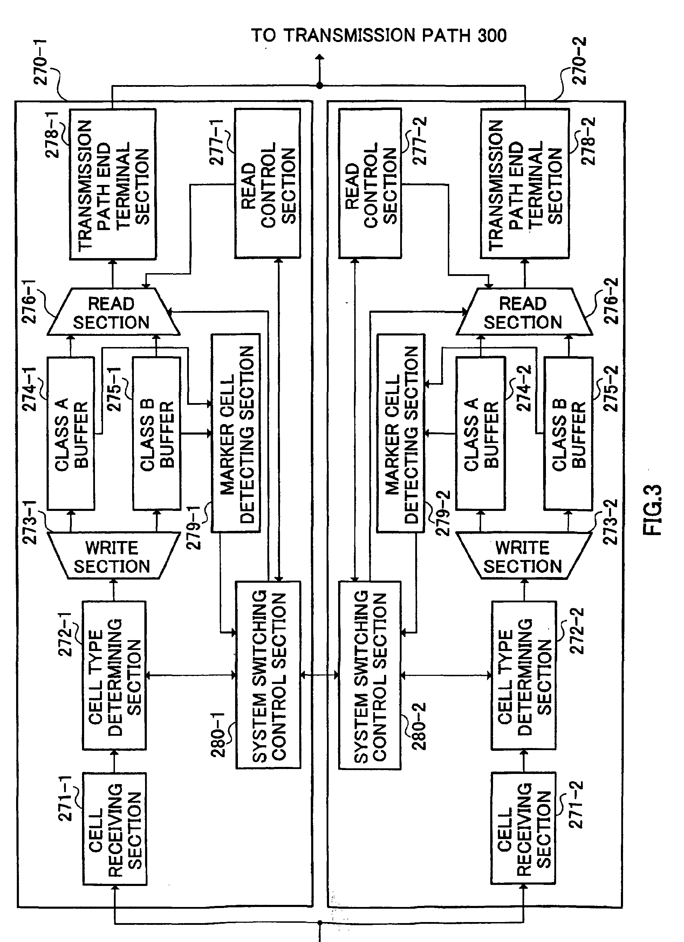

Configurations of first transmission path interface section 270-1 and second transmission path interface section 270-2 will be described specifically below with reference to FIG.3.

As illustrated in FIG.3, each of first transmission path interface section 270-1 and second transmission path interface section 270-2 respectively has cell receiving section 271-1 or 271-2, cell type determining section 272-1 or 272-2, write section 273-1 or 273-2, quality-class A buffer 274-1 or 274-2, quality-class B buffer 275-1 or 275-2, read section 276-1 or 276-2, read control section 277-1 or 277-2, transmission path end terminal section 278-1 or 278-2, marker cell detecting section 279-1 or 279-2 and system switching control section 280-1 or 280-2.

Cell receiving section 271 receives cells from cell assembling section 250. Cell type determining section 272 refers to cell headers (VPI and VCI) of the cell received in cell receiving section 271 to determine a buffer to store the cell. Further, the section 272 detects reception of a cell matching in format with a predetermined marker cell.

When write section 273 is notified a buffer to store the cell from cell type determining section 272, the section 273 writes the cell in the instructed buffer. Quality-class A buffer 274 and quality-class B buffer 275 are to store cells for band assurance. Buffers are provided for each quality class (for example, each connection or required quality for connection (such as delay or abandonment rate)) for assuring band over transmission path 300. In this embodiment two quality classes, quality class A and quality class B, are provided and two buffers are provided for respective quality classes.

When read section 276 is notified a quality class to read a cell from read control section 277, the section 276 reads the cell from the buffer, and outputs the cell to transmission path end terminal section 278. Read control section 277 determines a quality class to read a cell at predetermined intervals (required to transmit a cell to a transmission path, i.e., obtained by dividing a data amount of a cell by a transmission path rate), and instructs read section 276 to read a cell.

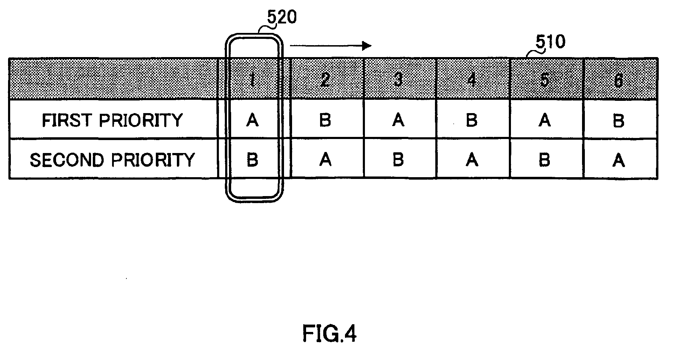

A configuration of read control section 277 will be described with reference to FIG.4.

Read control section 277 has reading order table 510 and reading pointer 520. As an example, the configuration of reading order table 510 is explained. In table 510, A or B denotes a quality class of a buffer. The horizontal axis of the table indicates the reading order, 1, 2,...,N-1 , N (N=6 in this example) , where the leftmost column is first read and sequentially a column to the right of the read column is read viewed in the figure. The vertical axis indicates a reading priority in the same column, and a quality class in the first row of the table has the highest priority. The row with the highest priority is determined to assure the band assigned to each connection in connection setting. In this embodiment, it is assumed in reading order table 510 that a transmission path rate is 1Mbps and a band assigned to each of quality class A and quality class B is 0.5Mbps (when the transmission path rate is 1Mbps reading once every two times corresponds to 0.5Mbps). The row having a second or less priority defines the quality class to read a cell when the quality class with the higher priority does not have any cell.

Reading pointer 520 indicates a column number, 1 to N (in this example, N=6) in reading order table 510.

Read control section 277 refers to a column (for example, 1) indicated by reading pointer 520 to determine a quality class to read, and after determining, increments the reading pointer by 1. In this way, when determining a next reading quality class, "2" to the right of the "1" is referred in reading order table 510. When the reading pointer reaches the maximum value of N (in this example, N=6), the pointer is initialized in next reading point increment and indicates "1".

Transmission path end terminal section 278 performs mapping cells received from read section 276 onto transmission path 300 to transmit.

Marker cell detecting section 279 judges a first cell in each quality class buffer to detect the marker cell. System switching control section 280 collects information required for system switching, provides instructions to each section, and communicates required information with the other system switching control section in the other transmission path interface section.

The operations of first transmission path interface section 270-1 and second transmission path interface section 270-2 in this embodiment will be described below with reference to FIGs.2 and 3. Explanations are divided into three steps; the step of "from during the general operation to the time a marker cell is received", the step of "receiving the marker cell", and the step of "finishing the system switching after receiving the marker cell". As a precondition, it is assumed that in the initial state, first transmission path interface section 270-1 is a system for current use, while second transmission path interface section 270-2 is a system for reserve use. In addition, system switching control section 280, cell type determining section 272, read control section 277 and read section 276 hold information indicating that the section 270-1 or 270-2 to which the sections belong is either a system for current use or reserve use, and perform the operation for current use as described below when being used as current use, while performing the operation for reserve use as described below when being used as reserve use.

The operation of "from during the general operation to the time a marker cell is received" will be described first.

Cell type determining section 272-1 in first transmission path interface section 270-1 for current use stores all the received cells in quality-class A buffer 274-1 and/or quality-class B buffer 275-1 through write section 273-1. Read control section 277-1 determines a quality class to read a cell to notify read section 276-1, and read section 276-1 reads a cell from the buffer for the notified quality class to transmit over transmission path 300 through transmission path end terminal section 278-1.

Meanwhile, cell type determining section 272-2 in second transmission path interface section 270-2 for reserve use abandons all the received cells. Read control section 277-2 does not instruct read section 276-2 to read a cell.

The operation at the time "receiving the marker cell" will be described below.

When receiving a marker cell, cell type determining section 272-1 in first transmission path interface section 270-1 for current use replicates the marker cell, and instructs write section 273-1 to write the replicas in all the buffers (in this embodiment, two buffers, quality-class A buffer 274-1 and quality-class B buffer 275-1). Cell type determining section 272-1 notifies system switching control section 280-1 of reception of the marker cell. When receiving the notification indicative of reception of the marker cell, system switching control section 280-1 notifies system switching control section 280-2 in the transmission path interface section for reserve use of the contents of reading order table 510 and reading pointer 520 held in read control section 277-1.

Meanwhile, when receiving a marker cell, cell type determining section 272-2 in second transmission path interface section 270-2 for reserve use notifies system switching control section 280-2 of reception of the marker cell. At this point, the received marker cell is abandoned. When system switching control section 280-2 is notified of the contents of reading order table 510 and reading pointer 520 held in read control section 277-1 from system switching control section 280-1 for current use, the section 280-2 updates the contents of reading order table and reading pointer held in read control section 277-2 for reserve use to the same contents as notified.

The operation of "finishing the system switching after receiving the marker cell" will be described below.

Cell type determining section 272-1 in first transmission path interface section 270-1 for current use stores all the received cells in quality-class A buffer 274-1 and/or quality-class B buffer 275-1 through write section 273-1. When detecting that the first cell in each quality-class buffer is a marker cell, marker cell detecting section 279-1 abandons the marker cell, and notifies system switching control section 280-1 of a quality class in which the marker cell is detected. System switching control section 280-1 notifies system switching control section 280-2 for reserve use of the quality class in which the marker cell is detected. Read control section 277-1 determines a quality class to read a cell to notify read section 276-1, and read section 276-1 reads a cell from a buffer for the notified quality class to transmit over transmission path 300 through transmission path end terminal section 278-1. In addition, system switching control section 280-1 holds the quality class in which the marker cell is already detected, and after marker cells are detected in all the quality classes, notifies cell type determining section 272-1, read control section 277-1 and read section 276-1 of switching to the reserve use, while notifying system switching control section 280-2 for reserve use of switching to the current use. Further, all the cells are abandoned in all the buffers for current use (in this embodiment, two buffers, quality-class A buffer 274-1 and quality-class B buffer 275-1). Thereafter, first transmission path interface 270-1 operates as the system for reserve use, and system switching control section 280-1, cell type determining section 272-1, read control section 277-1 and read section 276-1 perform operations predetermined for reserve use.

Cell type determining section 272-2 in second transmission path interface section 270-2 for reserve use stores all the received cells in quality-class Abuffer 274-2 and/or quality-class B buffer 275-2 through write section 273-2. When receiving the notification indicative of the quality class in which the marker cell is detected from system switching control section 280-1 for current use, system switching control section 280-2 notifies read control section 277-2 of the quality class in which the marker cell is detected. Read control section 277-2 holds the quality class in which the marker cell is detected. Read control section 277-2 determines a quality class to read a cell to notify read section 276-2. When receiving the notification of the quality class to read a cell from read control section 277-2, read section 276-2 reads a cell from the buffer for the quality class to abandon.

When system switching control section 280-2 receives the notification indicative of switching to current use from system switching control section 280-1 for current use, cell type determining section 272-2, read control section 277-2 and read section 276-2 perform operations predetermined for current use.

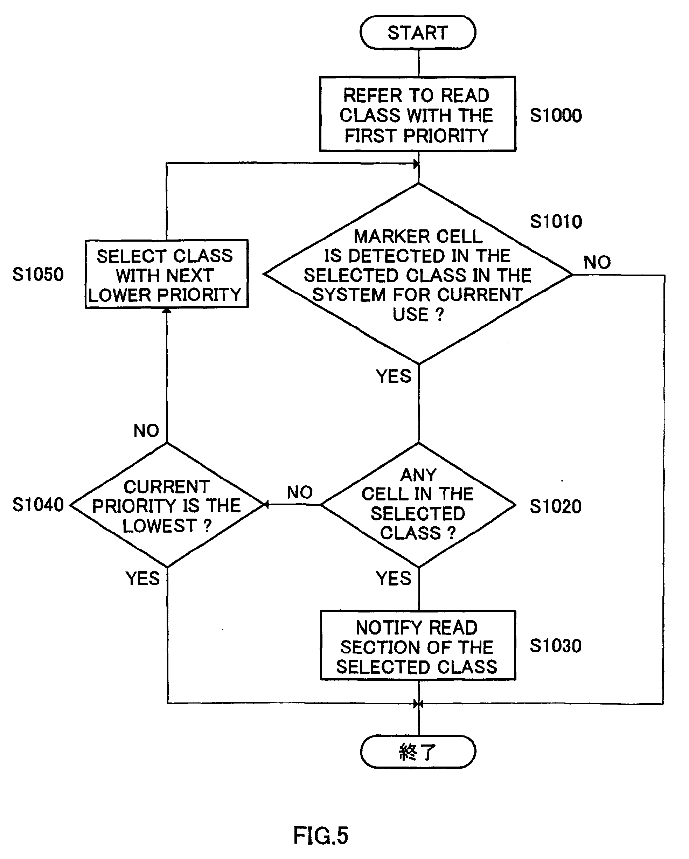

A method of determining a quality class to read a cell in read control section 277-2 will be described below with reference to a flow chart as illustrated in FIG.5.

A quality class is selected with a first priority in a column indicated by the reading pointer of the reading order table (ST1000). Next, it is determined whether a marker cell is detected in a buffer for the quality class for current use (ST1010). As a result of the determination, when a marker cell is not detected, processing is finished of selecting a quality class to read a cell. When a marker cell is detected, it is determined whether a cell is stored in a buffer for the quality class (ST1020). As a result of the determination, when a cell is stored in the buffer for the quality class, the quality class is notified to read section 276-2 as the quality class to read a cell (ST1030). Meanwhile, as a result of the determination in ST1020, when a cell is not stored in the buffer for the quality class, it is determined whether the current priority is the lowest in the reading order table (ST1040). As a result of the determination, when the current priority is the lowest, the processing is finished of selecting a quality class to read a cell, while when the current is not the lowest, a quality class with a lower priority is selected (ST1050). Thereafter, the processing flow returns to ST10101 to repeat the processing.

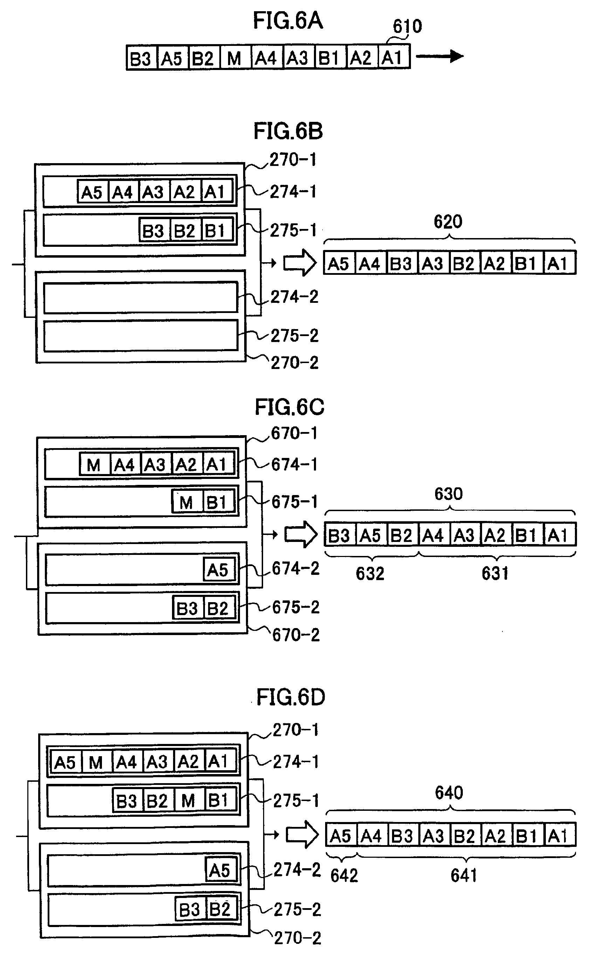

The operation performed when a cell stream containing a marker cell is input to first transmission path interface section 270-1 and second transmission path interface section 270-2 will be specifically described below comparing to the conventional technique with reference to FIG.6.

FIG.6A illustrates cell stream 610 to be input to first transmission path interface section 270-1 and second transmission path interface section 270-2 from cell assembling section 250. In cell stream 610 "A" or "B" indicates a quality class of the cell. "M" indicates a marker cell. In cell stream 610 the first cell is A1, and the last cell is B3.

FIG.6B illustrates a state after inputting cell stream 610 except the marker cell to first transmission path interface section 270-1 (current use) and second transmission path interface section 270-2 (reserve use) during the general operation (during the time system switching does not occur).

Input cells are stored for each quality class in class A buffer 274-1 and class B buffer 275-1 in first transmission path interface section 270-1 for current use. Meanwhile, any cells are not stored in classAbuffer 274-2 and class B buffer 275-2 in second transmission path interface section 270-2 for reserve use. During the general operation, the aforementioned state is the same both in the conventional technique and this embodiment. As a precondition, it is assumed that there is no cell reading timing during the time the cell stream is input.

Cell stream 620 indicates cells read from the buffers in the first transmission path interface section (current use) during the general operation (when the system switching does not occur) . During the general operation, the aforementioned state is the same both in the conventional technique and this embodiment.

FIG.6C illustrates a state after inputting cell stream 610 to first transmission path interface section 670-1 (for current use in the initial state) and second transmission path interface section 670-2 (for reserve use in the initial state) in the conventional data transmission apparatus.

The marker cell and cells input prior to the marker cell are stored for each quality class in class A buffer 674-1 and class B buffer 675-1 in first transmission path interface section 670-1 for current use. Meanwhile, the marker cell and cells input subsequently to the marker cell are stored for each quality class in class A buffer 674-2 and class B buffer 675-2 in second transmission path interface section 670-2 for reserve use. As a precondition, it is assumed that there is no cell reading timing during the time the cell stream is input.

Cell stream 630 indicates cells read from the buffers in conventional first transmission path interface section 670-1 (for current use in the initial state) and second transmission path interface section 670-2 (for reserve use in the initial state). Both cell streams 631 and 632 are part of cell stream 630. Cell stream 631 is output from the first transmission path interface section, and cell steam 632 is output from the second transmission path interface section.

FIG.6D illustrates a state after inputting cell stream 610 to first transmission path interface section 270-1 (for current use in the initial state) and second transmission path interface section 270-2 (for reserve use in the initial state) of this embodiment.

All the cells including the marker cell are stored for each quality class in class A buffer 274-1 and class B buffer 275-1 in first transmission path interface section 270-1 for current use. Meanwhile, cells input subsequently to the marker cell are stored for each quality class in class A buffer 274-2 and class B buffer 275-2 in second transmission path interface section 270-2 for reserve use. As a precondition, it is assumed that there is no cell reading timing during the time the cell stream is input.

Cell stream 640 indicates cells read from the buffers in first transmission path interface section 270-1 (for current use in the initial state) and second transmission path interface section 270-2 (for reserve use in the initial state) of this embodiment. Both cell streams 641 and 642 are part of cell stream 640. Cell stream 641 is output from the first transmission path interface section, and cell steam 642 is output from the second transmission path interface section.

It is understood by comparing cell stream 630 with cell stream 640 that both the cell streams do not have any overlapped and/or lost cells. However, in cell stream 631 cells of A2, A3 and A4 are output successively. This indicates that during a period from the time a marker cell is detected in quality class B to the time a marker cell is detected in quality class A, a cell of quality class B cannot to be transmitted despite such a cell arriving at a timing of reading a cell of quality class B. In other words, the transfer delay increase in cells B2 and B3 that arrive after the marker cell as compared to a period of time during the general operation, and thus the communication quality of quality class B deteriorates.

In this embodiment, the difference in the number of stored cells between the quality-class A buffer and quality-class B buffer is explained using a cell stream with a few cells as an example. Meanwhile, for example, when buffers are capable of storing cells corresponding to T ms in transmission path rate, the maximum time difference is T ms between the time a marker cell is detected in the quality-class A buffer and the time a marker cell is detected in the quality-class B buffer. Therefore, as the capacity of a buffer increases and T increases, the delay in transferring cells of a quality class in which a marker cell is first detected increases and the communication quality further deteriorates.

On the other hand, in cell stream 640 the cells are read in the same way as in cell stream 620 transmitted over the transmission path during the general operation. In other words, cell transmission is not suspended in each quality class during the system switching, and the transfer delay does not increase.

In this way, according to the data transmission apparatus of this embodiment, it is possible to perform switching between transmission path interface sections for current use and reserve use with no cell lost and/or overlapped without increasing the delay in transferring cells, and to prevent the communication quality for deteriorating during the system switching.

In addition, in the above description, the number of quality classes for band assurance is two, but the present invention is capable of being carried into practice also when the number of quality classes is N (arbitrary number).

Further, in the above description, a frame format to store user data is of ATM cell, but the present invention is capable of being carried into practice also using other frame formats.

As described above, according to the present invention, it is possible to perform switching between the current use and reserve use with no cell lost and/or overlapped without increasing the transfer delay.

This application is based on the Japanese Patent Application No.2001-162903 filed on May 30, 2001, entire content of which is expressly incorporated by reference herein.

### Industrial Applicability

The present invention is applicable to a data transmission apparatus and data transmission method for assembling received user data into ATM cells to transmit over a transmission path.

## Claims

1. A data transmission apparatus comprising:
a cell assembling section that assembles received user data into cells;
a first transmission path interface section and a second transmission path interface section each of which has a plurality of buffers for each quality class for band assurance and in which when one of sections operates as a system for current use that transmits cells assembled in the cell assembling section over a transmission path, the other one of the sections operates as a system for reserve use; and
a marker cell output instructing section that instructs the cell assembling section to output a marker cell that is a cell indicative of a timing of switching between the system for current use and the system for reserve use,
wherein in switching between the first transmission path interface section and the second transmission path interface section to switch between the system for current use and the system for reserve use, one of the sections that operates as the system for current use transmits cells from a buffer in which the marker cell is detected until marker cells are detected in the buffers for all quality classes, while upon reception of a notification indicative of a quality class in which the marker cell is detected in the system for current use, the other one of the sections that operates as the system for reserve use abandons the same cells as cells transmitted after the marker cell is detected from the buffer for the quality class in the system for current use, and when marker cells are detected in the buffers for all quality classes in the system for current use, the system for current use stops transmitting cells and is switched to the system for reserve use, while the system for reserve use starts transmitting cells and is switched to the system for current use.

2. The data transmission apparatus according to claim 1, wherein each of the first transmission path interface section and the second transmission path interface section has;
a cell type determining section that determines a type and a quality class of a received cell;
the plurality of buffers for each quality class for band assurance;
a cell write section that writes received cells in the plurality of buffers;
a cell read section which determines a reading order in which cells to transmit over a transmission path are read from the plurality of buffers, and reads the cells;
a marker cell detecting section that detects that a first cell in each of the plurality of buffers is a marker cell; and
a system switching control section that controls switching between the system for current use and the system for reserve use,
and in either of the first transmission path interface section and the second transmission path interface section operating as the system for current use, the cell write section writes replicas of the marker cell in the buffers for all quality classes when the marker cell is detected in the cell type determining section, while writing received cells in the plurality of buffers also after receiving the marker cell,
the cell read section notifies the transmission path interface section for reserve use of the reading order of cell when the marker cell is detected in the cell type determining section,
the marker cell detecting section abandons the marker cell when detecting that a first cell in each buffer is the marker cell, while notifying the transmission path interface section for reserve use of a quality class of the buffer in which the marker cell is detected, and
the system switching control section stops operations of the cell write section and the cell read section, abandons cells stored in the buffers for all the quality classes, and notifies the transmission path interface section for reserve use of system switching, when marker cells are detected in the buffers for all the quality classes.

3. The data transmission apparatus according to claim 2, wherein in either of the first transmission path interface section and the second transmission path interface section operating as the system for reserve, the cell write section abandons the marker cell when the marker cell is detected in the cell type determining section, while starting writing all received cells in the plurality of buffers, and
the cell read section reads from the plurality of buffers the same cells as cells transmitted after the marker cell is detected in the transmission path interface section for current use to abandon, based on the reading order of cell notified from the transmission path interface section for current use and the quality class of the buffer in which the marker cell is detected in the transmission path interface section for current use.

4. The data transmission apparatus according to claim 3, wherein the cell read section has:
a reading order table holding reading priorities for quality classes of the plurality of buffers at each reading timing in reading cells from the plurality of buffers; and
a reading pointer for referring to the reading order table to select a quality class to read a cell at each reading timing,
and in operating as reserve use, with respect to a quality class of a buffer selected by the reading pointer at each reading timing after the marker cell is detected, determines whether a marker cell is detected in the quality class of the transmission path interface section for current use, and when the marker cell is not detected, does not read a cell, while when the marker cell is detected, reads a cell from the buffer for the selected quality class if the buffer has a cell, or determines again whether a marker cell is detected in a quality class having a second priority if the buffer does not have a cell.

5. The data transmission apparatus according to claim 4, wherein in operating as reserve use, with respect to a quality class of a buffer selected by the reading pointer at each reading timing after the marker cell is detected, the cell read section determines whether a marker cell is detected in the quality class of the transmission path interface section for current use, and reads a cell of the quality class in which the marker cell is detected to abandon.

6. Abase station apparatus having a data transmission apparatus comprising:
a cell assembling section that assembles received user data into cells;
a first transmission path interface section and a second transmission path interface section each of which has a plurality of buffers for each quality class for band assurance and in which when one of sections operates as a system for current use that transmits cells assembled in the cell assembling section over a transmission path, the other one of the sections operates as a system for reserve use; and
a marker cell output instructing section that instructs the cell assembling section to output a marker cell that is a cell indicative of a timing of switching between the system for current use and the system for reserve use,
wherein in switching between the first transmission path interface section and the second transmission path interface section to switch between the system for current use and the system for reserve use, one of the sections that operates as the system for current use transmits cells from a buffer in which the marker cell is detected until marker cells are detected in the buffers for all quality classes, while upon reception of a notification indicative of a quality class in which the marker cell is detected in the system for current use, the other one of the sections that operates as the system for reserve use abandons the same cells as cells transmitted after the marker cell is detected from the buffer for the quality class in the system for current use, and when marker cells are detected in the buffers for all quality classes in the system for current use, the system for current use stops transmitting cells and is switched to the system for reserve use, while the system for reserve use starts transmitting cells and is switched to the system for current use.

7. The base station apparatus according to claim 6, wherein each of the first transmission path interface section and the second transmission path interface sections has;
a cell type determining section that determines a type and a quality class of a received cell;
the plurality of buffers for each quality class for band assurance;
a cell write section that writes received cells in the plurality of buffers;
a cell read section which determines a reading order in which cells to transmit over a transmission path are read from the plurality of buffers, and reads the cells;
a marker cell detecting section that detects that a first cell in each of the plurality of buffers is a marker cell; and
a system switching control section that controls switching between the system for current use and the system for reserve use,
and in either of the first transmission path interface section and the second transmission path interface section operating as the system for current use, the cell write section writes replicas of the marker cell in the buffers for all quality classes when the marker cell is detected in the cell type determining section, while writing received cells in the plurality of buffers also after receiving the marker cell,
the cell read section notifies the transmission path interface section for reserve use of the reading order of cell when the marker cell is detected in the cell type determining section,
the marker cell detecting section abandons the marker cell when detecting that a first cell in each buffer is the marker cell, while notifying the transmission path interface section for reserve use of a quality class of the buffer in which the marker cell is detected, and
the system switching control section stops operations of the cell write section and the cell read section, abandons cells stored in the buffers for all the quality classes, and notifies the transmission path interface section for reserve use of system switching, when marker cells are detected in the buffers for all the quality classes.

8. The base station apparatus according to claim 7, wherein in either of the first transmission path interface section and the second transmission path interface sections operating as the system for reserve, the cell write section abandons the marker cell when the marker cell is detected in the cell type determining section, while starting writing all received cells in the plurality of buffers, and
the cell read section reads from the plurality of buffers the same cells as cells transmitted after the marker cell is detected in the transmission path interface section for current use to abandon, based on the reading order of cell notified from the transmission path interface section for current use and the quality class of the buffer in which the marker cell is detected in the transmission path interface section for current use.

9. The base station apparatus according to claim 8, wherein the cell read section has:
a reading order table holding reading priorities for quality classes of the plurality of buffers at each reading timing in reading cells from the plurality of buffers; and
a reading pointer for referring to the reading order table to select quality class to read a cell at each reading timing,
and in operating as reserve use, with respect to a quality class of a buffer selected by the reading pointer at each reading timing after the marker cell is detected, determines whether a marker cell is detected in the quality class of the transmission path interface section for current use, and when the marker cell is not detected, does not read a cell, while when the marker cell is detected, reads a cell from a buffer for the selected quality class if the buffer has a cell, or determines again whether a marker cell is detected in a quality class having a second priority if the buffer does not have a cell.

10. The base station apparatus according to claim 9, wherein in operating as reserve use, with respect to a quality class of a buffer selected by the reading pointer at each reading timing after the marker cell is detected, the cell read section determines whether a marker cell is detected in the quality class of the transmission path interface section for current use, and reads a cell of the quality class in which the marker cell is detected to abandon.

11. A data transmission method in an apparatus having a dual configuration with a system for current use and a system for reserve use, wherein in the system for current use that transmits assembled cells over a transmission path, cells are transmitted from a buffer in which a marker cell is detected until marker cells are detected in buffers for all quality classes.

12. A data transmission method comprising:
determining a reading order in which a cell is read from a buffer for each quality class and transmitted over a transmission path;
reading a cell from the buffer for each quality class according to the determined reading order of cell to transmit over the transmission path;
detecting a marker cell at a beginning of the buffer for each quality class;
abandoning the detected marker cell;
reading a cell from the buffer for each quality class according to the reading order after abandoning the marker cell; and
stopping reading a cell when marker cells are detected at the beginning of buffers for all quality classes.

13. A data transmission method in an apparatus having a dual configuration with a system for current use and a system for reserve use, comprising:
assembling user data into cells;
assembling a marker cell indicative of a timing of switching between the system for current use and the system for reserve use;
transmitting in the system for current use a cell from a buffer in which the marker cell is detected until marker cells are detected in buffers for all quality classes;
receiving in the system for reserve use a notification of a quality class of the buffer in which the marker cell is detected in the system for current use, and abandoning the same cell as a cell transmitted after the marker cell is detected from the buffer for the quality class in the system for current use; and
causing the system for current use to stop transmitting cells and to be switched to the system for reserve use when marker cells are detected in the buffers for all the quality classes in the system for current use, while causing the system for reserve use to start transmitting cells and to be switched to the system for current use.
